# EUROPEAN PATENT SPECIFICATION

(11) **EP 1 196 261 B1**
(45) Date of publication and mention of the grant of the patent: **19.03.2003**
(21) Application number: 00989875.0
(22) Date of filing: 23.11.2000
(51) Int. Cl.: B23B 5/02

(54) **A METHOD OF MACHINING A HUB BEARING UNIT FOR A WHEEL OF A MOTOR VEHICLE**
EINE METHODE ZUM BEARBEITEN EINER NABENLAGEREINHEIT FÜR EIN FAHRZEUGRAD
PROCEDE D'USINAGE D'UN ROULEMENT DE MOYEU D'UNE ROUE DE VEHICULE A MOTEUR

(30) Priority: 25.11.1999 EP 99830732
(43) Date of publication of application: 17.04.2002
(73) Proprietor: SKF INDUSTRIE S.P.A., 10121 Torino (IT)
(72) Inventor: LOUSTANAU, Jean, Gérard, I-10064 Pinerolo (Torino)Italy (IT); DUCCI, Domenico, I-10020 Marentino (Torino) Italy (IT); CALDANA, Marcus, S-531 55 Lidkoeping (SE)
(74) Representative: Fioravanti, Corrado
(86) International application number: EP0011684
(87) International publication number: WO01038025

(56) References cited:
- WO-A-00/74883
- WO-A-98/38436

## Description

The present invention refers to a method of machining a hub bearing unit for a wheel of a motor vehicle.

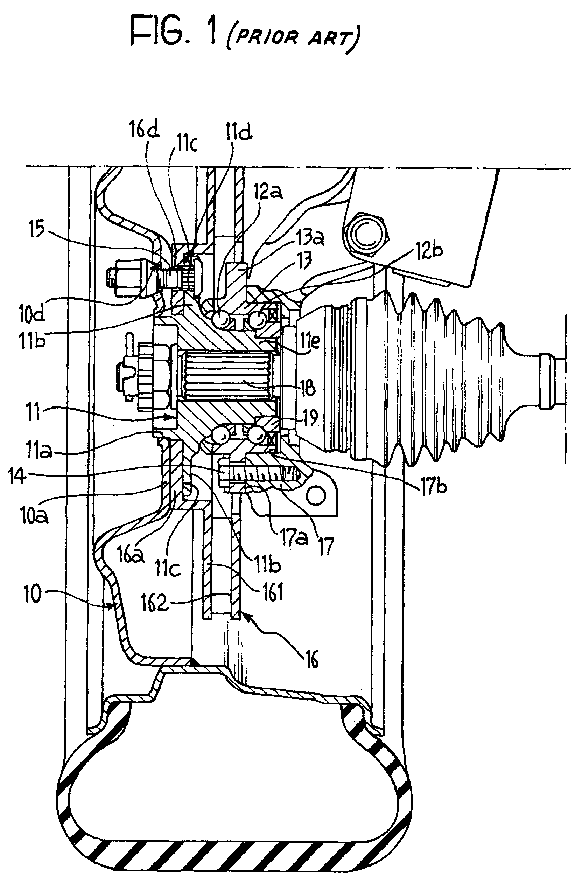

For a better understanding of the technical problems and solutions concerning the mounting of a brake rotor on the hub of the wheel of a motor vehicle, the conventional design of a wheel unit is briefly described herein after, reference being made to figure 1 of the attached drawings.

With reference to figure 1, a wheel 10 forms a radial flange 10a defining an inner edge 10b adapted for resting and centring the wheel on the outer surface of an outwardly axially extending cylindrical portion 11a of a hub 11. The hub 11 forms an outwardly extending radial flange 11b and a central cylindrical portion 11k forming one of the radially inner raceways of a rolling bearing with a dual set of rolling elements 12a, 12b. A separate race element 19 forms the radially inner raceway for the set of rolling elements 12b. The bearing further comprises a stationary outer race 13 forming an outwardly extending radial flange 13a in which there are obtained axial bores 13b for receiving bolts 14 to fasten the bearing to a suspension standard 17.

The radial flange 11b of the hub has an axially outer radial surface 11c and a plurality of axial bores 11d for receiving bolts 15 for mounting the wheel 10.

A brake rotor 16 forms an inwardly extending radial flange 16a with axial bores 16d aligned with the bores 11d of the hubflange 11 and with corresponding axial bores 10d obtained in the wheel 10 to allow the passage of the fastening bolts 15. The tightening of the bolts 15 clamps together the rim flange 10a, the rotor flange 16a and the hub flange 11b. Through the centre of the hub 11 there is formed a splined bore 11e adapted to receive a splined shaft 18 driving the wheel for rotation.

According to the prior art, the method of machining and mounting the components constituting the above discussed wheel assembly provides that firstly the complete hub-bearing unit already finished is mounted to the suspension standard 17. Particularly, the finishing operation has to be accurate on the hub flange surface 11c which serves as an axial rest for the brake flange 16a. Then, the brake rotor 16 with the opposite sides of its flange 16a and its opposite braking surfaces 161, 162 already accurately machined is inserted onto the cylindrical portion 11a of the hub. After that, the wheel rim is inserted over the portion 11a and finally the bolts 15 are tightened through the aligned bores 10d, 16d and 11d.

With this approach, the orientation of the braking surfaces of the brake rotor with respect to the rotation axis of the bearing is affected by manufacturing tolerances of the various components of the assembly and possible mounting errors. Therefore, when the wheel assembly is mounted, the braking surfaces are not precisely oriented perpendicular to the rotation axis of the bearing. In fact, besides being affected by constructional planarity errors of the facing flanges of the hub and the brake rotor, the planarity of the hub flange and especially of the brake flange is jeopardised by deformation caused by the tightening of the bolts 15, which generates undulations in said radial surfaces.

Planarity errors and non-perpendicular braking surfaces and flange surfaces with respect to the rotation axis of the bearing determine the so-called axial runout of the brake, which is undesirable as it provokes excessive vibration, brake shudder and irregular or premature wear of the brake pads. With present techniques, the axial runout ranges between about 90 and about 100 µm.

U.S. Patent No. 5,430,926 discloses a method of producing a brake rotor and a bearing assembly wherein a brake rotor having a braking surface and a hub portion is firstly machined at the bore of the hub. A bearing unit is then installed in the bore of the hub portion. The bearing unit includes an outer race which engages the bore and a rotatable inner race. The assembly comprised of the brake rotor and the bearing unit is then mounted on a machining apparatus supporting the assembly by the inner race of the bearing unit. Using the machining apparatus, the braking surface of the brake rotor is machined.

U.S. Patent No. 5,842,388 proposes a method of machining a wheel hub and a brake component coupled by bolts. The braking surface is machined together with a cylindrical surface of the hub for seating a bearing.

International patent application WO-A-98/38436 proposes to secure a brake disc to the flange of a vehicle wheel hub and mount the assembly comprised of the hub, bearing and brake on a machining apparatus. The machining apparatus is used to machine the braking surfaces of the brake disc so that the these are oriented in a predetermined relationship relative to the outer race of the bearing.

The above mentioned prior art solutions, although providing a braking surface having a minimum axial runout, have a drawback in that when the original brake rotor, machined with the above processes, has to be replaced with a new brake rotor, the latter has braking surfaces with a considerable axial runout, that may be reduced to acceptable values only if the whole assembly comprising the hub, the bearing and the brake rotor is placed in a machining apparatus to repeat the machining of the braking surfaces.

It is an object of the present invention to provide a method capable of reducing the axial runout of the outer surface of the hub flange serving as a rest for the brake rotor flange and the wheel. In particular, it is desired to reduce the axial runout to a minimum, regardless of manufacturing tolerances of the wheel assembly components and independently of errors in mounting the bearing.

Another object of the invention is to provide a method which allows to keep down to a low value the runout of the braking surfaces of the brake discs, both the original ones and those in replacement of the originals.

This object is accomplished, in accordance with the present invention, by a method as defined in claim 1.

It is a further object of the present invention to provide a method capable of reducing to a minimum the runout independently of deformation caused by the forced insertion of the wheel mounting studs.

This further object is accomplished, in accordance with the present invention, by a method as defined in claim 2.

Preferred embodiments of the invention are defined in the other dependent claims.

The features and the advantages of the invention will appear from the detailed description of the few embodiments thereof, given by way of example, reference being made to the accompanying drawings, in which:
- FIG.1 is a partial axial cross sectional view of a wheel assembly manufactured and mounted according to the prior art;
- FIG.2 is an axial cross sectional view showing the machining of a surface of a flange of a hub bearing unit, in accordance with a first embodiment of this invention; and
- FIGs.3 to 6 are axial cross sectional views, similar to that of FIG.2, showing further embodiments of the invention.

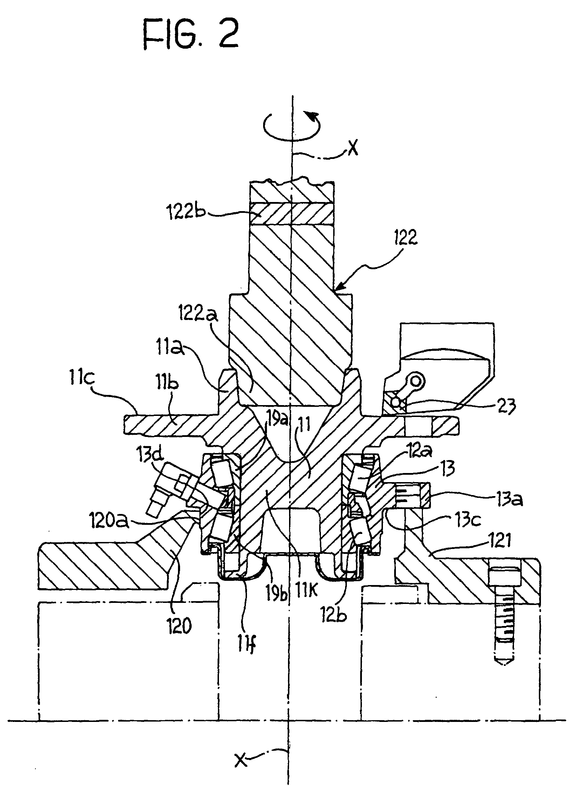

Referring to FIG.2, there is illustrated a hub bearing unit for a driving wheel, of the type having a stationary outer race 13 as discussed in the introductory part of the description.

The general structure of the unit shown in Figure 2 may be considered generally known. Only the elements of specific importance and interest for the purposes of the implementation of the present invention will therefore be described in detail in the following description. For the construction of the parts and elements not shown in detail, reference may therefore be made to any wheel hub unit of known kind, as for example the one shown in FIG.1 or those disclosed in the prior art documents cited in the preamble of the description.

The outer race 13 forms an outer radial flange 13a for mounting to the suspension (not shown in FIG.2) of a motor vehicle, and the outer raceways for a dual set of rolling elements, rollers or balls, 12a, 12b. The inner raceways are formed by the hub 11 and a pair of separate annular elements 19a, 19b axially locked to the hub for example by cold forming an axially inner rim 11f of the hub. Cold forming of rim 11f is performed applying an axial load to the annular inner elements 19a, 19b in order to obtain an axially preloaded hub-bearing unit.

The radial flange 13a of the outer race 13 provides an axially inner radial surface 13c that in use abuts against a radial surface 17a of the suspension (as shown in FIG.1). Proximate to the flange 13a, the outer race 13 provides an outer cylindrical surface 13d adapt for fitting in a seating bore of the suspension, as indicated at 17b in FIG.1.

The hub 11 forms a tubular central portion 11k and an outwardly extending radial flange 11b with an axially outer side 11c. The hub further forms an axially outwardly protruding cylindrical portion 11a.

The radial surface 11c of the hub flange 11b serves as an axial resting surface for a radial flange 16a of a brake rotor 16, as shown in FIG.1. The surface 11c must therefore define a surface possibly free of planarity errors, to avoid or at least reduce the inconveniences cited in the introductory part of the description.

Axial bores 11d are formed in the hub flange 11b for receiving studs 15 (FIG.1) to mount the hub to the wheel and the brake disc.

The pre-assembled and axially preloaded hub-bearing unit is located on a machining apparatus provided with a plurality of stationary radial jaws 120 and axial locators 121, and a rotary collet 122.

The radial jaws 120, only one of which is shown for simplicity in FIG.2, are in this example in number of three, angularly spaced 120 degrees therebetween. The radial jaws 120 act against the outer cylindrical surface 13d of the outer race 13 for centring the hub-bearing unit with respect to the axis of rotation of the collet 122. The jaws 120 have axial engaging surfaces 120a for engaging the outer bearing race 13 so as to represent the datum of the cylindrical seat 17b of the vehicle suspension in which the unit will then be mounted.

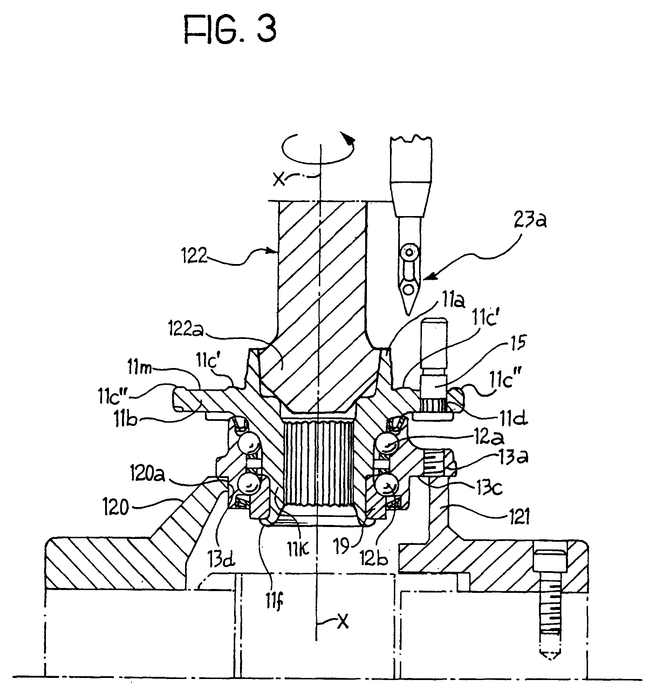

In the embodiment shown in FIG.2 there are provided three axial locators 121 (only being shown in the drawing) angularly spaced 120 degrees therebetween with respect to the axis of rotation of the collet 112 and angularly offset about 60 degrees relative to the radial jaws 120. The axial locators 121 may also be arranged in a number or shape different from what is shown in FIG.3, as far as they provide several steady axial resting points around the axis x for the axially inner (or inboard) surface of the radial flange 13a of outer bearing race 13, so as to represent the datum offered in use by the axial surface 17a of the suspension (FIG.1).

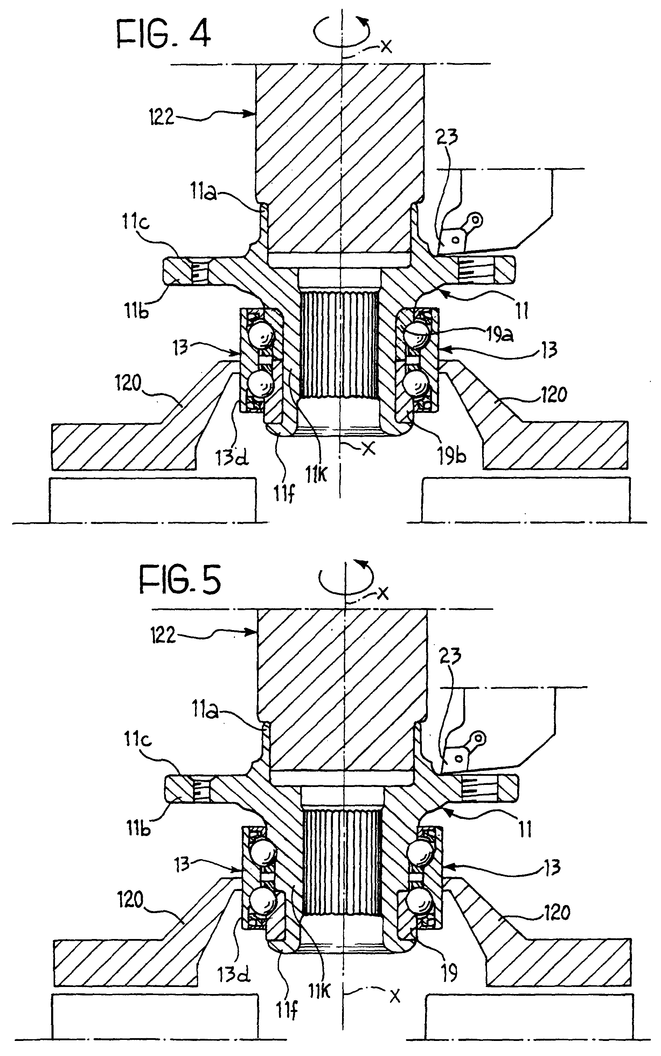

It should be noticed that in the example of FIG.2, the inner raceways are formed by the pair of inner race elements 19a, 19b. It is to be understood that the present invention, in all its possible embodiments, can be equally applied both to hub-bearing units in which one of the radially inner raceways is obtained directly on the hub (as shown in FIGs.3 and 5) and to units in which the inner raceways are formed by race elements produced separately and then fitted onto the hub (as shown in FIG.4).

The rotating collet 122 serves to drive the hub 11 and the inner race elements 19a, 19b for rotation with respect to the outer race 13 so that a cutting tool 23 can finish the axially outer surface 11c of the hub flange 11b.

To impart rotary motion to the rotatable parts of the hub-bearing unit, the collet 122 provides a lower head portion 122a for engaging the hub, in this example by engaging the annular protruding hub portion 11a. The engaging head 122a may also be shaped differently form the embodiment here shown. In any case, the collet head 122a should grip the hub with a moderate force or anyway in such manner so as not to generate stresses in the hub which provoke appreciable elastic deformation of the flange 11b. Otherwise, the cutting tool 23 would finish the hub flange side lic with a surface that would not result planar once the head 122a is removed from the unit being machined.

So, the surface 11c is machined by rotating the hub about the rotation axis defined by the position of the outer race 13, whereby this surface, once finished, is perpendicular with respect to the geometrical axis about which the hub will rotate in use.

In order that the collet 122 will not transmit onto the flanged hub 11 considerable stress components in the direction of a geometrical axis not being coincident with the rotation axis x, preferably the rotation axis of the collet is floating, for example by mounting the collet on a flexible coupling or a ball joint, schematically designated 122b. As an alternative or in addition, the collet may be made of a yielding material.

It will be appreciated that the accuracy with which the surface 11c is machined is independent of the manufacturing and mounting tolerances of the components constituting the hub-bearing unit. The axial runout of the surfaces 11c can so be kept down to values not exceeding 10 µm, therefore much lower with respect to the prior art.

Furthermore, it will be appreciated that when it is necessary to replace the original brake rotor with a new one, the latter will also have its braking surfaces oriented perpendicular with respect to the rotation axis of the bearing, as it will rest against a radial surface (surface 11c) having an extremely low axial runout, i.e. perfectly perpendicular with respect to the rotation axis defined by the outer race of the bearing.

Another embodiment of the method according to the invention is shown in FIG.3. In this variant, the radial surface 11c is machined with the studs 15 already forcefully inserted in the bores 11d of the flange 11b. As a result, the planarity of the finished surface 11c will not be affected by deformation provoked by the forced insertion of the studs. To machine the surface 11c, in such variant there is used a cutting tool 23a of elongated and thin shape to reach also that portion of the surface 11c comprised between the zone of the bores 11d and the cylindrical portion 11a.

It is understood that the cutting tool 23a, although being thin, cannot easily reach the surface 11c up to the zone where the bores 11d open onto the surface 11c when the studs 15 are inserted, to avoid leaving zones of the surface 11c which are not machined and protrude from the rest of the surface, the flange 11b is formed with a recessed zone 11m in the shape of a circular annulus embracing the zone where the bores 11d rise to the surface 11c. The cutting tool 23a machines the portions of surface 11c externally and internally adjacent to the recessed annulus 11m, as indicated at 11c' and 11c''. These portions of machined surface are those against which the brake rotor will rest axially.

Generally, the invention is applicable to any kind of hub bearing unit with rotating flanged annular element. In FIGs.4 and 5 the method of the invention is carried out on hub bearing units in which the stationary outer race 13 is not flanged and therefore is locked only by radial jaws 120. For these and other applications where the outer cylindrical surface 13d of race 13 is to be mounted forcefully with radial interference in a seat of the suspension, during the machining it is preferable that a radial preloading is applied to the outer race, simulating the aforesaid forced mounting. Such a radial load may for example be exerted by the same radial jaws 120.

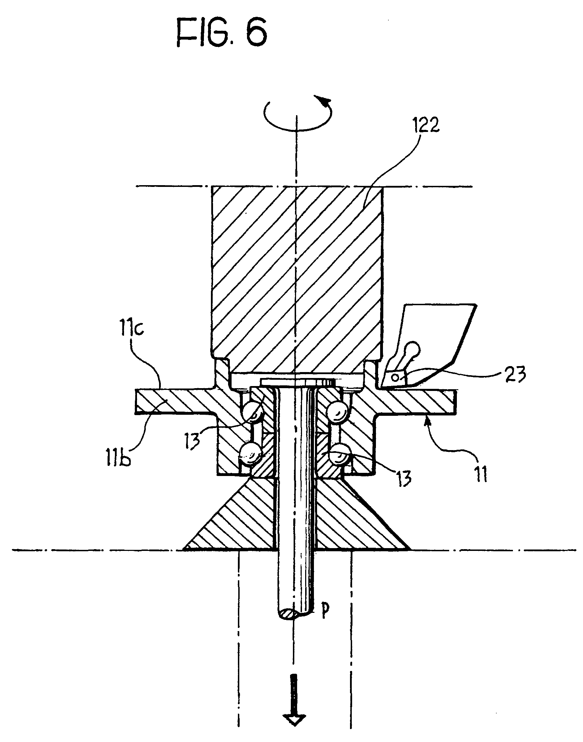

Similarly, the invention is equally applicable to hub bearing units of the type illustrated in FIG.6, where the rotating flanged race 11 forms the outer raceways and the inner raceways are formed by a pair of axially adjacent stationary bearing rings 13. In this later case, and generally for all those applications where the hub bearing units are retained on the machining apparatus in a non-preloaded condition, it is advantageous to apply an axial preloading P during machining, so as to nullify axial clearance between the inner and the outer raceways.

## Claims

1. A method of machining a hub bearing unit for the wheel of a motor vehicle, comprising the steps of:
- (a) providing a hub-bearing unit comprising:
- a rotatable annular element (11) for mounting a wheel, said rotatable element having a radial flange (11b) with at least a portion of radial surface (11c, 11c', 11c'') for axially resting against a brake rotor (16);
- at least one stationary annular element (13) to be mounted to the vehicle and defining a rotation axis (x) for the rotatable element (11);
- (b) holding the stationary element (13) in a determined position by means of non rotating retaining means (120, 121) of a machining apparatus to orient the rotation axis (x) in a determined direction;
- (c) rotating the rotatable element (11) relative to the stationary element (13) about the rotation axis (x); and
- (d) simultaneously carrying out a machining operation, thereby obtaining a finished surface oriented perpendicular with respect to the rotation axis (x), **characterised in that** the machining operation is constituted by machining said radial surface portion (11c, 11c', 11c'').

2. A method according to claim 1, wherein the steps (c) and (d) are preceded by the step of:
- (a1) forcefully inserting wheel mounting studs (15) through axially aligned bores (11d) formed in the radial flange (11b) of the rotatable element (11).

3. A method according to claim 2, wherein the step (a) comprises the step of:
- (a2) forming in the flange (11b) a zone (11m) in the shape of a circular annulus which is recessed with respect to said radial surface portion (11c, 11c', 11c'') and embraces the zones of the axial bores (11d).

4. A method according to claim 3, wherein the step (d) comprises the step of:
- (d1) machining two portions (11c', 11c'') of the radial surface (11c) internally (11c') and externally (11c'') adjacent to the recessed zone (11m).

5. A method according to claim 1, wherein:
the stationary element (13) is an outer bearing race defining outer raceways and the rotatable element (11) is a flanged hub fast for rotation with inner raceways, and wherein said step (b) comprises the step of:
- (b1) holding the stationary outer bearing race (13) by means of radial retaining means (120) engaging an outer cylindrical surface (13d) of the outer race (13).

6. A method according to claim 5, wherein the outer cylindrical surface (13d) of the outer race (13) is adapted to be forcefully mounted with radial interference in a seat of a vehicle suspension (17), and wherein said steps (b) and (d) include the step of applying a radial preloading during machining to the outer race (13), simulating the said forced mounting.

7. A method according to claim 5, wherein the step (b) comprises the step of:
- (b2) holding the stationary outer bearing race (13) by means of axial retaining means (121) engaging an essentially radial surface (13c) of the outer race (13).

8. A method according to claim 7, wherein the essentially radial surface (13c) is formed by a radial flange (13a) of the outer race (13).

9. A method according to claim 1, wherein:
- the rotatable annular element (11) is a radially outer bearing element defining outer raceways and
- hub bearing unit includes a pair of axially adjacent stationary races (13) defining inner raceways.

10. A method according to claim 1, further comprising the step of:
- applying an axial preloading (P) to the hub bearing unit during machining so as to nullify axial clearance between the inner and the outer raceways of the unit.

11. A method according to claim 1, wherein the rotatable element (11) further comprises an outwardly axially protruding cylindrical portion (11a), and wherein the rotatable element is rotated in said steps (c) and (d) by means of a rotary element (122) having an engaging portion (122a) adapted for engaging the protruding portion (11a); said engaging portion (122a) engaging the rotatable element (11) so as not to generate therein stresses provoking appreciable elastic deformation of the flange (11b).

12. A method according to claim 11, wherein the rotary element (122) has a floating axis of rotation.

13. A method according to claim 11, wherein the rotary element (122) is mounted on a flexible coupling or a ball joint (122b).

14. A method according to claim 11, wherein the rotary element (122) comprises at least a portion made of an elastically yielding material.

## Patentansprüche

1. Verfahren zum Bearbeiten einer Radnaben-Lagereinheit für das Rad eines Kraftfahrzeugs, umfassend die folgenden Schritte:
- (a) das Bereitstellen einer Radnaben-Lagereinheit, umfassend
- ein ringförmiges Drehelement (11) zum Anbringen eines Rads, wobei dieses Drehelement einen radialen Flansch (11b) mit zumindest einem Abschnitt einer radialen Oberfläche (11c, 11c', 11c") zum axialen Aufliegen auf einem Bremsrotor (16) besitzt;
- zumindest ein stationäres ringförmiges Element (13), das am Fahrzeug anzubringen ist und eine Rotationsachse (x) für das Drehelement (11) definiert;
- (b) das Halten des stationären Elements (13) in einer festgelegten Position mittels sich nicht drehender Halteeinrichtungen (120, 121) eines Bearbeitungsapparats, um die Rotationsachse (x) in eine festgelegte Richtung auszurichten;
- (c) das Drehen des Drehelements (11) um die Rotationsachse (x), relativ zum stationären Element (13); und
- (d) gleichzeitig das Durchführen einer Bearbeitungsoperation, wodurch eine bezüglich der Rotationsachse (x) lotrecht ausgerichtete, fertig bearbeitete Oberfläche erhalten wird, **dadurch gekennzeichnet, dass** die Bearbeitungsoperation in der Bearbeitung des radialen Oberflächenabschnitts (11c, 11c', 11c") besteht.

2. Verfahren gemäß Anspruch 1, wobei den Schritten (c) und (d) folgender Schritt vorangeht:
- (a1) das Zwingen von Radmontagebolzen (15) durch axial ausgerichtete Bohrungen (11d), die im radialen Flansch (11b) des Drehelements (11) gebildet sind.

3. Verfahren gemäß Anspruch 2, wobei der Schritt (a) folgenden Schritt umfasst:
- (a2) das Bilden eines Bereichs (11m) in Form eines kreisförmigen Rings, der hinsichtlich des radialen Oberflächenabschnitts (11c, 11c', 11c") vertieft ist und die Bereiche der axialen Bohrungen (11d) umschließt, im Flansch (11b).

4. Verfahren gemäß Anspruch 3, wobei der Schritt (d) folgenden Schritt umfasst:
- (d1) das Bearbeiten zweier Abschnitte (11c', 11c'') der radialen Oberfläche (11c), innen (11c') und außen (11c") an den vertieften Bereich (11m) angrenzend.

5. Verfahren gemäß Anspruch 1, wobei:
das stationäre Element (13) ein äußere Laufringe definierender, äußerer Lagerring und das Drehelement (11) eine für die Drehung mit inneren Laufringen befestigte, geflanschte Radnabe ist, und wobei der Schritt (b) folgenden Schritt umfasst:
- (b1) das Halten des stationären äußeren Lagerrings (13) mittels radialer Halteeinrichtungen (120), welche in eine äußere zylindrische Oberfläche (13d) des äußeren Laufrings (13) eingreifen.

6. Verfahren gemäß Anspruch 5, wobei die äußere zylindrische Oberfläche (13d) des äußeren Laufrings (13) dazu angepasst ist, mit einer radialen Interferenz in einem Sitz einer Fahrzeugaufhängung (17) montiert zu werden, und zwar mit Gewalt, und wobei die Schritte (b) und (d) den während der Bearbeitung erfolgenden Schritt der Anlegung einer radialen Vorspannung an den äußeren Laufring (13) umfassen, wodurch die erzwungene Montage simuliert wird.

7. Verfahren gemäß Anspruch 5, wobei der Schritt (b) folgenden Schritt umfasst:
- (b2) das Halten des stationären äußeren Lagerrings (13) mittels axialer Halteeinrichtungen (121), welche in eine im Wesentlichen radiale Oberfläche (13c) des äußeren Laufrings (13) eingreifen.

8. Verfahren gemäß Anspruch 7, wobei die im Wesentlichen radiale Oberfläche (13c) durch einen radialen Flansch (13a) des äußeren Laufrings (13) gebildet ist.

9. Verfahren gemäß Anspruch 1, wobei:
- das ringförmige Drehelement (11) ein äußere Laufringe definierendes, radial äußeres Lagerelement ist und
- die Radnaben-Lagereinheit ein Paar axial benachbarte, innere Laufringe definierende, stationäre Laufringe (13) umfasst.

10. Verfahren gemäß Anspruch 1, weiters umfassend den Schritt des:
- Anlegens einer axialen Vorspannung (P) an die Radnaben-Lagereinheit während des Bearbeitens, um zwischen dem inneren und äußeren Laufring der Einheit einen axialen Spielraum aufzuheben.

11. Verfahren gemäß Anspruch 1, wobei das Drehelement (11) weiters einen axial nach außen abstehenden, zylindrischen Abschnitt (11a) umfasst und wobei das Drehelement in den Schritten (c) und (d) mittels eines Drehelements (122) mit einem zum Eingreifen in den abstehenden Teil (11a) angepassten, eingreifenden Teil (122a) gedreht wird; wobei der eingreifende Teil (122a) in das Drehelement (11) eingreift, um darin keine, eine nennenswerte elastische Verformung des Flansches (11b) hervorrufende Belastungen zu erzeugen.

12. Verfahren gemäß Anspruch 11, wobei das Drehelement (122) eine freie Rotationsachse besitzt.

13. Verfahren gemäß Anspruch 11, wobei das Drehelement (122) an einer beweglichen Kupplung oder einem Kugelgelenk (122b) angebracht ist.

14. Verfahren gemäß Anspruch 11, wobei das Drehelement (122) zumindest einen aus einem elastisch nachgebenden Material bestehenden Teil umfasst.

## Revendications

1. Procédé d'usinage d'un ensemble formant roulement de moyeu destiné à une roue de véhicule à moteur, comprenant les étapes qui consistent à :
(a) fournir un ensemble formant roulement de moyeu comprenant :
- un élément annulaire tournant (11) pour monter une roue, ledit élément tournant possédant une bride dans le sens radial (11b), avec au moins une partie de la surface radiale (11c, 11c', 11c") qui vient appuyer dans le sens radial contre un rotor de frein (16) ;
- au moins un élément annulaire fixe (13) destiné à être monté sur le véhicule et définissant un axe de rotation (x) pour l'élément tournant (11) ;
(b) maintenir l'élément fixe (13) dans une position déterminée à l'aide de moyens de retenue non rotatifs (120, 121) d'un appareil d'usinage afin d'orienter l'axe de rotation (x) dans une direction déterminée ;
(c) mettre en rotation l'élément tournant (11) par rapport à l'élément fixe (13) autour de l'axe de rotation (x); et
(d) exécuter simultanément une opération d'usinage permettant ainsi d'obtenir une surface finie orientée dans le sens perpendiculaire par rapport à l'axe de rotation (x) ; **caractérisé en ce que** l'opération d'usinage comprend l'usinage de ladite partie de surface radiale (11c, 11c', 11c");

2. Procédé selon la revendication 1, dans lequel les étapes (c) et (d) sont précédées de l'étape qui consiste à :
- (a1) insérer en force des goujons de montage de la roue (15) dans des trous (11d) alignés dans le sens axial ménagés dans la bride axiale (11b) de l'élément tournant (11).

3. Procédé selon la revendication 2, dans lequel l'étape (a) comprend l'étape qui consiste à :
- (a2) former dans la bride (11b) une zone (11m) sous la forme d'un anneau circulaire qui est évidé par rapport à ladite partie de surface radiale (11c, 11c', 11c"), et enserre les zones des trous ménagés dans le sens axial (11d).

4. Procédé selon la revendication 3, dans lequel l'étape (d) comprend l'étape qui consiste à :
- (d1) usiner deux parties (11c' ; 11c") de la surface radiale (11c), du côté interne (11c') et du côté externe (11c"), adjacentes à la zone évidée (11m).

5. Procédé selon la revendication 1, dans lequel :
l'élément fixe (13) est une bague de roulement externe définissant des chemins de roulement externes et l'élément tournant (11) est un moyeu fixé par bride prévu pour la rotation avec les chemins de roulement internes, et dans lequel ladite étape (b) comprend l'étape qui consiste à :
- (b1) maintenir la bague de roulement externe fixe (13) à l'aide de moyens de retenue dans le sens radial (120) se mettant en prise avec une surface cylindrique externe (13d) de la bague externe (13).

6. Procédé selon la revendication 5, dans lequel la surface cylindrique externe (13d) de la bague externe (13) est adaptée pour être montée en force avec interférence radiale dans un logement de suspension de véhicule (17), et dans lequel lesdites étapes (b) et (d) incluent l'étape qui consiste à appliquer une charge préliminaire dans le sens radial pendant l'usinage de la bague externe (13), simulant ledit montage en force.

7. Procédé selon la revendication 5 ; dans lequel l'étape (b) comprend l'étape qui consiste à :
- (b2) maintenir la bague de roulement externe fixe (13) à l'aide de moyens de retenue dans le sens axial (121) se mettant en prise avec une surface essentiellement dans le sens radial (13c) de la bague externe (13).

8. Procédé selon la revendication 7, dans lequel la surface essentiellement dans le sens radial (13c) est formée par une bride radiale (13a) de la bague externe (13).

9. Procédé selon la revendication 1, dans lequel :
- l'élément annulaire tournant (11) est un élément de roulement externe dans le sens radial définissant des chemins de roulement externes et
- l'ensemble formant roulement de moyeu comprend une paire de bagues fixes adjacentes (13) dans le sens axial définissant des chemins de roulement internes.

10. Procédé selon la revendication 1, comprenant en outre l'étape qui consiste à :
appliquer une charge préliminaire (P) dans le sens axial à l'ensemble formant roulement de moyeu pendant l'usinage de manière à supprimer le jeu axial entre les chemins internes et externes de l'ensemble.

11. Procédé selon la revendication 1, dans lequel l'élément tournant (11) comprend en outre une partie cylindrique (11a) faisant saillie vers l'extérieur dans le sens axial, et dans lequel l'élément tournant est mis en rotation suivant lesdites étapes ( c) et (d) à l'aide d'un élément tournant (122) possédant une partie de mise en prise (122a) adaptée pour coopérer avec la partie faisant saillie (11a); ladite partie de mise en prise (122a) coopérant avec l'élément tournant (11) de sorte à ne pas générer à l'intérieur de ce dernier de contraintes provoquant une déformation sensiblement élastique de la bride (11b).

12. Procédé selon la revendication 11, dans lequel l'élément tournant (122) possède un axe flottant de rotation.

13. Procédé selon la revendication 11, dans lequel l'élément tournant (122) est monté sur un accouplement articulé ou joint à rotule (122b).

14. Procédé selon la revendication 11, dans lequel l'élément tournant (122) comprend au moins une partie faite dans un matériau élastique.
